# EUROPEAN PATENT SPECIFICATION

(11) **EP 3 065 469 B1**
(45) Date of publication and mention of the grant of the patent: **11.10.2017**
(21) Application number: 15290057.7
(22) Date of filing: 04.03.2015
(51) Int. Cl.: H04W 48/16

(54) **PEER-TO-PEER NETWORK CONNECTIVITY IN A MOBILE ENVIRONMENT**
PEER-TO-PEER-NETZWERKKONNEKTIVITÄT IN EINER MOBILEN UMGEBUNG
CONNECTIVITÉ DE RÉSEAU POSTE À POSTE DANS UN ENVIRONNEMENT MOBILE

(43) Date of publication of application: 07.09.2016
(73) Proprietor: Alcatel Lucent, 92100 Boulogne-Billancourt (FR)
(72) Inventor: De Loof, Jourik, 2018 Antwerpen (BE); Liekens, Werner Mario, 2018 Antwerpen (BE)
(74) Representative: ALU Antw Patent Attorneys

(56) References cited:
- WO-A1-2013/162538
- WO-A1-2013/184110
- US-A1- 2013 040 574
- US-A1- 2013 178 163

## Description

### Technical Field

The present invention generally relates to wireless personal area networking devices, more specifically to communication devices operating according to the Bluetooth Low Energy networking technology. Bluetooth Low Energy is also referred to as BLE or Bluetooth Smart. BLE is part of the Bluetooth standard since 2010 under the Bluetooth Core Specification Version 4.0.

### Background

Bluetooth Low Energy communication devices, such as sensors or Internet of Things (loT) devices, need to be permanently connected to the Internet to offload their data. This permanent data connection is for example needed by network based search engines that need permanent access to these devices. For energy efficiency, these devices may have BLE radio interface for establishing a peer-to-peer connection with a nearby BLE Access Point or BLE AP such as for example a smartphone. The BLE Access Point then provides the network connectivity to the BLE device, for example by a cellular network connection, a Wi-Fi connection or wired network connection.

The publication WO2013162538 discloses a method that includes receiving, at a user equipment comprising a plurality of radio interfaces including at least one wireless proximity communications interface, an indication representative of a context of the user equipment determined based on the at least one wireless proximity communications interface being proximate to a sensor; and initiating, based on the received indication, at least one event to control at least one radio access link.

### Summary

A problem with BLE devices is that they are becoming highly mobile and can get out of reach of their BLE Access Point thereby losing their network connectivity. When the data connection is lost, the BLE device can no longer be searched for within the network.

Furthermore, BLE is a point-to-point technology where device and access point are typically always kept together, e.g. as a heartbeat monitor that is connected to a smartphone. However, more and more BLE is used as a data offload technology where data from the BLE device is offloaded to the network, but the BLE point-to-point technologies are generally not ideally suited for this, especially not when taking the above mentioned mobile aspect into account.

It is therefore an object of the current disclosure to alleviate the above identified problems and disadvantages and to enhance the network connectivity of BLE devices. This is achieved, in a first aspect, by a networking device comprising:
- a Bluetooth Low Energy, BLE, wireless interface for establishing a peer-to-peer connection with a BLE device;
- a network interface configured to connect with a network, and to provide the BLE device network access to this network, and to communicate with one or more other nearby networking devices;
- a measuring module for measuring a first performance of this peer-to-peer connection;
- a decision module configured to perform the following steps:
   ∘ instructing the BLE interface to break the peer-to-peer connection with the BLE device;
   ∘ requesting the other nearby networking devices a second performance of a respective peer-to-peer connection between a respective other nearby networking device and the BLE device;
   ∘ selecting from this first and second performance a best performing networking device;
   ∘ instructing the best performing networking device to establish a second peer-to-peer connection with BLE device thereby providing network access to the BLE device;
   and wherein the decision module is further configured to perform the steps when the first performance is below a predetermined threshold.

The networking device thus functions as an access point to the BLE device. As the connection with the BLE device is a peer-to-peer connection, the BLE device is not discoverable by the other devices and, hence, they cannot determine the performance of a possible connection with the BLE device. By breaking the connection, the BLE device becomes discoverable by the other devices and, therefore, they can measure the performance of a potential future connection with the BLE device. The performance results are then sent back to the networking device. Then, one of the other networking devices can be selected as the new access point or the networking device itself can remain to function as access point.

It is an advantage that networking connectivity is guaranteed for the BLE device even if it is in a mobile environment where it is not always in reach of the same access point device. It is a further advantage that no further logic is required at the side of the BLE device, but all connectivity management is performed by the BLE access points. This is particularly interesting because BLE access points such as smartphones tend to be more easy to adapt than the BLE devices such as for example smart watches, sensors or wearable electronics.

The performing the steps when the first performance is below a predetermined threshold allows minimizing the amount of times that the steps have to be performed and thus minimizing the interruption in data connectivity for the BLE device.

The first and second performance may further correspond to a first and second signal strength. The requesting then further comprises requesting the other devices to measure a signal strength of a signal transmitted by the BLE device as the second performance

Measurement of the signal strength is embedded in the Physical or PHY layer of the BLE devices making it readily available. As the BLE device is no longer connected to the BLE device, the other devices can identify that the signal is transmitted by the BLE device and then retrieve the signal strength of this signal as a measure of the performance of a possible future peer-to-peer connection with the BLE device.

According to a second aspect the disclosure relates to a method for providing network connectivity by a networking device to a Bluetooth Low Energy, BLE, device comprising:
- establishing a BLE peer-to-peer connection between this BLE device and this networking device;
- providing the BLE device this network connectivity by a network interface of the networking device connected to a network; and
- measuring a first performance of the peer-to-peer connection; and , when said first performance is below a predetermined threshold:
   ∘ breaking the peer-to-peer connection with the BLE device;
   ∘ requesting one or more other nearby networking devices over said network a second performance of a respective peer-to-peer connection with said BLE device;
   ∘ selecting from the first and second performance a best performing networking device;
   ∘ instructing this best performing networking device to establish a second peer-to-peer connection with the BLE device thereby providing network access to the BLE device.

According to a third aspect the disclosure relates to a computer program product comprising computer-executable instructions for performing the method according to the second aspect when the program is run on a computer.

According to a fourth aspect the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates Bluetooth Low Energy access points according to an embodiment of the invention providing network access to a Bluetooth Low Energy device; and
Fig. 2 illustrates steps performed by Bluetooth Low Energy access points according to an embodiment of the invention in order to provide network access to a Bluetooth Low Energy device ; and
Fig. 3 illustrates a suitable computing system for performing the steps of a Bluetooth Low Energy access point according to an embodiment of the invention.

### Detailed Description of Embodiment(s)

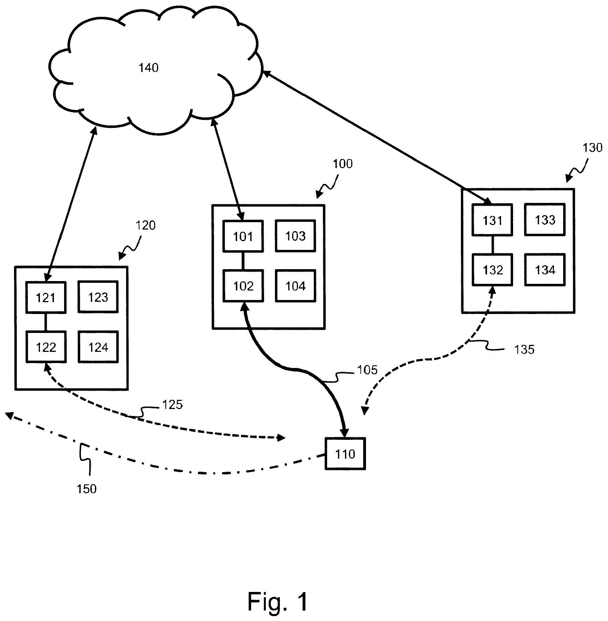

The disclosure relates to providing nearly persistent network connectivity to Bluetooth Low Energy devices or shortly BLE devices in a mobile environment. For network connectivity the BLE devices must rely on the communication device they are connected to by the BLE protocol. This situation is depicted in Fig. 1 where a communication device 100 is depicted according to an embodiment of the invention. BLE device 110 has a wireless BLE connection 105 with the BLE communication device 100. In BLE, the connection 105 is a peer-to-peer connection implying that there is no specific difference in BLE functionality between the BLE device 110 and the BLE communication device 100. BLE device 110 may for example be a wireless battery-operated sensor or wearable.

Apart from a BLE wireless interface 102, the communication device 100 also comprises a network interface 101 by which it is connected to a network 140 such as for example a Local Area Network (LAN) or Wide Area Network (WAN). The network interface 101 may be embodied by an wireless interface such as a Wireless LAN or WLAN interface or cellular interface. Network interface may also be a wired interface such as an Ethernet interface. By forwarding data traffic received on the BLE interface 102 from the BLE 110 to the network interface 101 and thus to the network 140 and vice versa, the communication device 100 provides network connectivity to the BLE 110. Therefore, the communication device 100, functions as an access point to the network 140 for the BLE device 110. As communication device 100 and also devices 120 and 130 provide network connectivity to BLE devices, they are also denoted as BLE access points in this description in order to differentiate them from BLE device 110. BLE access points 100, 120, 130 may for example be a smartphone, tablet or a portable or desktop computer.

According to an embodiment, BLE access point 100 also comprises a measurement module 103 and a decision module 104. The measurement module 103 provides a performance measurement of the current established BLE connection 105. The measurement may for example be done be retrieving the signal strength of communication symbols received on the BLE interface 102 from the BLE device 110. More specifically, this signal strength value may be obtained from the BLE's PHY or Physical layer.

Decision module 104 comprises all computational logic to guarantee network connectivity for the BLE device 110. For this purpose it interacts with other BLE access points 120 and 130. These access points 120 and 130 comprise the same components, i.e., a BLE interface 122, a network interface 121, 131 for connecting with the network 140, a measurement module 123, 133 and a decision module 124, 134.

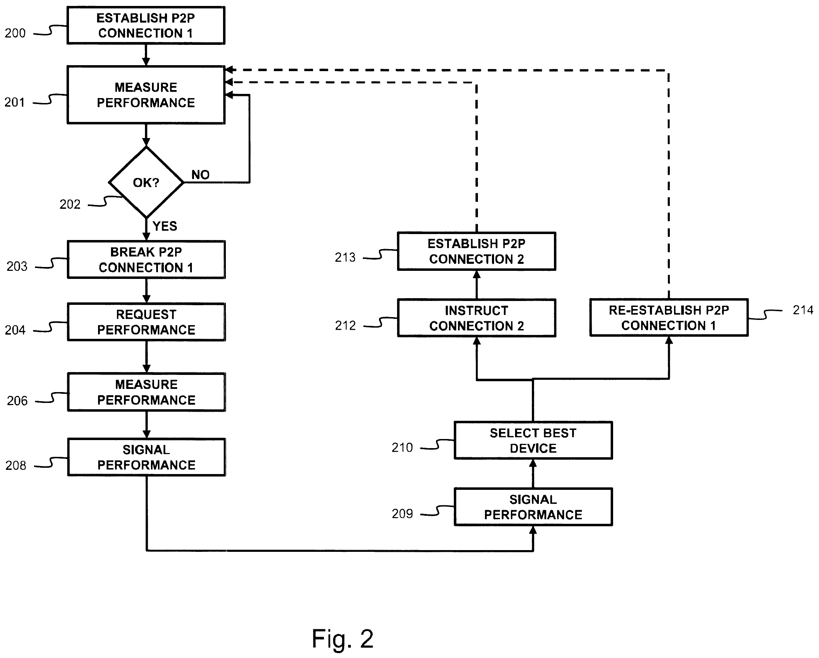

Fig. 2 illustrates several steps performed by the BLE access points 100, 120, 130 in order to guarantee the network connectivity of the BLE device 110. In step 200, the BLE access point 100 establishes a peer-to-peer BLE connection 105 with the BLE device 110. By this connection, the BLE device 110 is provided network connectivity to the network 140 over the network interface 101. When the connection is established, module 103 monitors in step 201 the performance of the connection 105. When, in step 202, the performance drops under a certain threshold, the decision module 104 instructs the BLE interface 102 in step 203 to break the connection 105. This performance test under step 202 may be done regularly, for example at certain time intervals.

Such a drop in performance may typically arise in a mobile environment, for example when the BLE device 110 moves away along direction 150 from the BLE access point 100. Due to such a movement, the received signal strength will decrease until the performance drops below a certain threshold and the network connectivity may no longer be guaranteed.

Then, in step 204, the decision module 104 requests the other nearby BLE devices 120, 130 to perform a performance measurement of a peer-to-peer connection 125, 135 with the BLE device 110. As the devices 120, 130 are also connected with the network 140, this request is performed over the network interface 101 and received on the respective network interfaces 121, 131 of the other BLE devices.

Upon receiving the performance request, each of the devices 120, 130 performs the steps 206 and 208. As the BLE connection 105 has been broken, the BLE device 110 is now discoverable by the other devices 120, 130. In step 206, both BLE access points 120 and 130 then estimate the performance of a potential future BLE connection 125, 135 with the BLE device 110. This may be done by measuring the signal strength of received BLE signals and verifying that the signals originate from the respective BLE device 110. It should be noted that the steps may be performed for any number of BLE devices 120, 130. Preferably, the request 204 is sent to all nearby devices, i.e., devices that could potentially establish a connection with the BLE device 110. Nearby devices are typically in a range of up to 100 metres, preferably in a range of less than one kilometre.

When all performance measurements have been received by the decision module 104, it selects the device with the best performance in step 210. This may for example be the device which measured the highest signal strength from the BLE device 110. Two possibilities may come up. The first is when the device 100 itself is still the best performing device despite the low performance detected under step 202. In this case, the decision module proceeds to step 214 and reestablishes the peer-to-peer connection 105 with the BLE device. In this case, the decision module 104 proceeds to step 201.

The second possibility is when the best performing device is not device 100 but one of the nearby devices 120, 130. In this case, decision module 104 proceeds to step 212 and sends an instruction to the nearby device 120 to establish a new connection 125. The next steps are then no longer performed by device 100, but by device 120, i.e., device 120 establishes the peer-to-peer BLE connection 125 and proceeds to step 201.

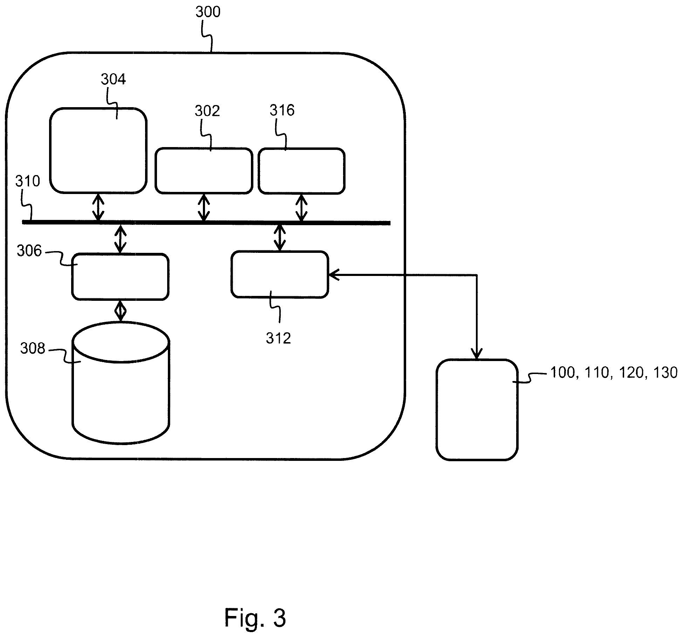

Fig. 3 shows a suitable computing system 300 as a further embodiment of the BLE access points 100, 120 or 130. Computing system 300 may in general be formed as a suitable general purpose computer and comprise a bus 310, a processor 302, a local memory 304, one or more optional output interfaces 316, a communication interface 312, a storage element interface 306 and one or more storage elements 308. Bus 310 may comprise one or more conductors that permit communication among the components of the computing system 300. Processor 302 may include any type of conventional processor or microprocessor that interprets and executes programming instructions. Local memory 304 may include a random access memory (RAM) or another type of dynamic storage device that stores information and instructions for execution by processor 302 and/or a read only memory (ROM) or another type of static storage device that stores static information and instructions for use by processor 302. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example SATA disk drives, and control the reading and writing of data to and/or from these storage elements 308. Although the storage elements 308 above is described as a local disk, in general any other suitable computer-readable media such as a solid state drive or flash memory cards could be used. The system 300 described above can also run as a Virtual Machine above the physical hardware.

Computing system 300 may comprise two network interfaces 312, wherein one corresponds to the BLE communication interface 102, 122, 132 and one corresponds to network interface 101, 121, 131. Steps as performed by decision module 104, 124, 134 may be implemented as compiled processor instructions and executed on processor 302.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A networking device (100) comprising:
- a Bluetooth Low Energy, BLE, wireless interface (102) for establishing a peer-to-peer connection (105) with a BLE device (110);
- a network interface (101) configured to connect with a network (140), and to provide said BLE device (110) network access to said network, and to communicate with one or more other nearby networking devices (120, 130);
- a measuring module (103) for measuring a first performance of said peer-to-peer connection;
- a decision module (104) configured to perform the following steps:
∘ instructing (203) said BLE interface (102) to break said peer-to-peer connection (105) with said BLE device;
∘ requesting (204) said other nearby networking devices (120, 130) a second performance of a respective peer-to-peer connection (125, 135) between a respective other nearby networking device and said BLE device (110);
∘ selecting (210) from said first and second performance a best performing networking device (100, 120, 130);
∘ instructing (212, 214) said best performing networking device to establish a second peer-to-peer connection (105, 125, 135) with said BLE device thereby providing network access to said BLE device;
wherein said decision module is further configured to perform said steps when said first performance is below a predetermined threshold.

2. A networking device (100) according to claim 1 wherein said first and second performance corresponds to a first and second signal strength and said requesting further comprises requesting said other nearby networking devices (120, 130) to measure a signal strength of a signal transmitted by said BLE device as said second performance.

3. A method for providing network connectivity by a networking device (100) to a Bluetooth Low Energy, BLE, device (110) comprising:
- establishing (200) a BLE peer-to-peer connection (105) between said BLE device and said networking device;
- providing said BLE device said network connectivity by a network interface of said networking device (100) connected to a network; and
- measuring (201) a first performance of said peer-to-peer connection; and, when said first performance is below a predetermined threshold:
∘ breaking (203) said peer-to-peer connection (105) with said BLE device;
∘ requesting (204) one or more other nearby networking devices (120, 130) over said network a second performance of a respective peer-to-peer connection (125, 135) with said BLE device;
∘ selecting (210) from said first and second performance a best performing networking device (100, 120, 130);
∘ instructing (212, 214) said best performing networking device to establish a second peer-to-peer connection (105, 125, 135) with said BLE device thereby providing network access to said BLE device.

4. A computer program product comprising computer-executable instructions for performing the method according to claim 3 when the program is run on a computer.

5. A computer readable storage medium comprising the computer program product according to claim 4.

6. A data processing system programmed for carrying out the method according to claim 3.

## Patentansprüche

1. Netzwerkvorrichtung (100), umfassend:
- eine drahtlose BLE-Schnittstelle (102) (Bluetooth Low Energy) zum Aufbau einer Peer-to-Peer-Verbindung (105) mit einer BLE-Vorrichtung (110);
- eine Netzwerkschnittstelle (101), die konfiguriert ist zum Verbinden mit einem Netzwerk (140) und zum Bereitstellen des Netzwerkzugangs für besagte BLE-Vorrichtung (110) zu besagtem Netzwerk und zum Kommunizieren mit einer oder mehreren anderen Netzwerkvorrichtungen (120, 130) in der Nähe;
- ein Messmodul (103) zum Messen einer ersten Leistung von besagter Peer-to-Peer-Verbindung;
- ein Entscheidungsmodul (104), das konfiguriert ist zum Durchführen der folgenden Schritte:
∘ Anweisen (203) besagter BLE-Schnittstelle (102) zum Unterbrechen besagter Peer-to-Peer-Verbindung (105) mit besagter BLE-Vorrichtung;
∘ Anfordern (204) besagter anderen Netzwerkvorrichtungen (120, 130) in der Nähe einer zweiten Leistung einer entsprechenden Peer-to-Peer-Verkbindung (125, 135) zwischen einer entsprechenden anderen Netzwerkvorrichtung in der Nähe und besagter BLE-Vorrichtung (110);
∘ Auswählen (210) aus besagter ersten und zweiten Leistung einer Netzwerkvorrichtung bester Leistung (100, 120, 130);
∘ Anweisen (212, 214) besagter Netzwerkvorrichtung bester Leistung zum Aufbau einer zweiten Peer-to-Peer-Verbindung (105, 125, 135) mit besagter BLE-Vorrichtung unter Bereitstellen eines Netzwerkzugangs zu besagter BLE-Vorrichtung;
wobei besagtes Entscheidungsmodul weiterhin konfiguriert ist zum Durchführen besagter Schritte, wenn besagte erste Leistung unterhalb eines vorbestimmten Schwellenwerts liegt.

2. Netzwerkvorrichtung (100) nach Anspruch 1, wobei besagte erste und zweite Leistung einer ersten und zweiten Signalstärke entsprechen und besagtes Anfordern weiterhin umfasst Anfordern besagter anderen Netzwerkvorrichtungen in der Nähe (120, 130) zum Messen einer Signalstärke eines Signals, das von besagter BLE-Vorrichtung als besagte zweite Leistung übertragen wird.

3. Verfahren zum Bereitstellen von Netzwerkkonnektivität durch eine Netzwerkvorrichtung (100) für eine BLE-Vorrichtung (Bluetooth Low Energy) (110), umfassend:
- Aufbau (200) einer BLE-Peer-to-Peer-Verbindung (105) zwischen besagter BLE-Vorrichtung und besagter Netzwerkvorrichtung;
- Bereitstellen besagter BLE-Vorrichtung besagter Netzwerkkonnektivität mittels einer Netzwerkschnittstelle von besagter Netzwerkvorrichtung (100), die mit einem Netzwerk verbunden ist; und
- Messen (201) einer ersten Leistung besagter Peer-to-Peer-Verbindung; und, wenn besagte erste Leistung unterhalb eines vorbestimmten Schwellenwerts liegt:
∘ Unterbrechen (203) besagter Peer-to-Peer-Verbindung (105) mit besagter BLE-Vorrichtung;
∘ Anfordern (204) einer oder mehrerer anderer Netzwerkvorrichtungen in der Nähe (120, 130) über besagtes Netzwerk einer zweiten Leistung einer entsprechenden Peer-to-Peer-Verbindung (125, 135) mit besagter BLE-Vorrichtung;
∘ Auswählen (210) aus besagter ersten und zweiten Leistung einer Netzwerkvorrichtung bester Leistung (100, 120, 130);
∘ Anweisen (212, 214) besagter Netzwerkvorrichtung bester Leistung zum Aufbau einer zweiten Peer-to-Peer-Verbindung (105, 125, 135) mit besagter BLE-Vorrichtung unter Bereitstellen eines Netzwerkzugangs zu besagter BLE-Vorrichtung;

4. Computerprogramm umfassend computerausführbare Befehle zum Durchführen des Verfahrens nach Anspruch 3, wenn das Programm auf einem Computer läuft.

5. Computerlesbares Speichermedium, umfassend das Computerprogramm-Produkt nach Anspruch 4.

6. Datenverarbeitungssystem, programmiert zum Ausführen des Verfahrens nach Anspruch 3.

## Revendications

1. Dispositif de réseautage (100) comprenant :
- une interface sans fil Bluetooth à faible énergie, BLE, (102) pour établir une connexion de poste à poste (105) avec un dispositif BLE (110) ;
- une interface réseau (101) configurée pour se connecter à un réseau (140), et pour fournir audit dispositif BLE (110) un accès audit réseau, et pour communiquer avec un ou plusieurs autres dispositifs de réseautage (120, 130) proches ;
- un module de mesure (103) pour mesurer une première performance de ladite connexion de poste à poste ;
- un module de décision (104) configuré pour exécuter les étapes suivantes :
∘ commander (203) à ladite interface BLE (102) d'interrompre ladite connexion de poste à poste (105) avec ledit dispositif BLE ;
∘ demander (204) auxdits autres dispositifs de réseautage (120, 130) proches une deuxième performance d'une connexion de poste à poste (125, 135) respective entre un autre dispositif de réseautage proche respectif et ledit dispositif BLE (110) ;
∘ sélectionner (210) à partir desdites première et deuxième performances un dispositif de réseautage (100, 120, 130) fonctionnant le mieux ;
∘ commander (212, 214) audit dispositif de réseautage fonctionnant le mieux d'établir une deuxième connexion de poste à poste (105, 125, 135) avec ledit dispositif BLE fournissant ainsi un accès au réseau audit dispositif BLE ;
dans lequel ledit module de décision est en outre configuré pour exécuter lesdites étapes lorsque ladite première performance est inférieure à un seuil prédéterminé.

2. Dispositif de réseautage (100) selon la revendication 1 dans lequel lesdites première et deuxième performances correspondent à une première et une deuxième intensités de signal et ladite demande comprend en outre la demande auxdits autres dispositifs de réseautage (120, 130) proches de mesurer une intensité de signal d'un signal transmis par ledit dispositif BLE comme ladite deuxième performance.

3. Procédé pour fournir une connectivité de réseau au moyen d'un dispositif de réseautage (100) à un dispositif Bluetooth à faible énergie, BLE, (110) comprenant les étapes suivantes :
- établir (200) une connexion de poste à poste BLE (105) entre ledit dispositif BLE et ledit dispositif de réseautage ;
- fournir audit dispositif BLE ladite connectivité de réseau au moyen d'une interface réseau dudit dispositif de réseautage (100) connecté à un réseau ; et
- mesurer (201) une première performance de ladite connexion de poste à poste ; et, dans lequel ladite première performance est inférieure à un seuil prédéterminé :
∘ interrompre (203) ladite connexion de poste à poste (105) avec ledit dispositif BLE;
∘ demander (204) à un ou plusieurs autres dispositifs de réseautage proches (120, 130) sur ledit réseau une deuxième performance d'une connexion de poste à poste (125, 135) respective avec ledit dispositif BLE ;
∘ sélectionner (210) à partir desdites première et deuxième performances un dispositif de réseautage (100, 120, 130) fonctionnant le mieux ;
∘ commander (212, 214) audit dispositif de réseautage fonctionnant le mieux d'établir une deuxième connexion de poste à poste (105,125,135) avec ledit dispositif BLE fournissant ainsi un accès au réseau audit dispositif BLE.

4. Produit de programme informatique comprenant des instructions exécutables par un ordinateur pour réaliser le procédé selon la revendication 3 lorsque le programme est exécuté sur un ordinateur.

5. Support de stockage lisible par ordinateur comprenant le produit de programme informatique selon la revendication 4.

6. Système de traitement de données programmé pour exécuter le procédé selon la revendication 3.
